# EUROPÄISCHE PATENTSCHRIFT

(11) **EP 2 433 741 B1**
(45) Veröffentlichungstag und Bekanntmachung des Hinweises auf die Patenterteilung: **19.06.2013**
(21) Anmeldenummer: 11182679.8
(22) Anmeldetag: 26.09.2011
(51) Int. Cl.: B23Q 1/00, B23Q 1/70, B23Q 11/10

(54) **Werkzeugmaschine mit austauschbarer Spindeleinheit**
Machine tool with exchangeable spindle unit
Machine-outil dotée d'une unité de broche échangeable

(30) Priorität: 27.09.2010 DE 102010047558
(43) Veröffentlichungstag der Anmeldung: 28.03.2012
(73) Patentinhaber: STAMA Maschinenfabrik GmbH, 73278 Schlierbach (DE)
(72) Erfinder: Feinauer, Achim, 73033 Göppingen (DE); Blazek, Pavel, 73277 Owen (DE)
(74) Vertreter: Witte, Weller & Partner

(56) Entgegenhaltungen:
- EP-A1- 0 920 940
- EP-A1- 1 609 549
- DE-U1-202005 018 002

## Beschreibung

Die vorliegende Erfindung betrifft eine Werkzeugmaschine zur Bearbeitung von Werkstücken mit Hilfe von Bearbeitungswerkzeugen, die in eine Werkzeugaufnahme einspannbar sind, die in einer um ihre Drehasche drehbar in einem Spindelgehäuse gelagerten Werkzeugspindel vorgesehen ist.

Eine derartige Werkzeugmaschine und entsprechende Werkzeugspindeln ist vielfach aus dem Stand der Technik bekannt.

Die bekannten Werkzeugspindeln werden bei Werkzeugmaschinen jeglicher Art eingesetzt, um an ihrem vorderen Ende in eine dort vorgesehene Werkzeugaufnahme vorzugsweise genormte Werkzeughalter, beispielsweise vom SK- oder HSK-Typ einzuspannen, in die wiederum Bearbeitungswerkzeuge eingespannt sind, mit denen die Werkstücke bearbeitet werden.

Diese Werkzeugmaschinen können Fahrständermaschinen sein, bei denen die Werkzeugspindel mit ihrem Spindelgehäuse, häufig auch als Spindelkopf bezeichnet, in z-Richtung, also in vertikaler Richtung, höhenverstellbar an einem Fahrständer gelagert ist, der wiederum in x- und y-Richtung auf einem Maschinengestell verfahrbar ist, an dem auch ein Werkstücktisch angeordnet ist, auf dem die zu bearbeitenden Werkstücke aufgespannt sind.

Bei diesem Maschinentyp sind alle drei Bewegungsachsen im Werkzeug angeordnet, das Werkstück bzw. der Werkstücktisch stehen still bzw. sind schwenkbar und drehbar um eine vierte bzw. fünfte Achse gelagert.

Bei anderen Maschinenkonzepten sind eine oder mehrere der translatorischen Achsen im Werkstück angeordnet, wobei die Werkzeugspindel vertikal oder horizontal ausgerichtet sein kann.

Es ist auch bekannt, derartige Werkzeugmaschinen mit mehreren Werkzeugspindeln auszurüsten, um entweder mehrere Werkstücke zeitgleich oder ein Werkstück nacheinander mit verschiedenen Bearbeitungswerkzeugen zu bearbeiten.

Die bekannten Werkzeugmaschinen können mit verschiedensten Werkzeugmagazinen ausgerüstet sein, um nacheinander verschiedene Werkstücke in die Werkzeugspindel einspannen zu können.

Bei all diesen Werkzeugmaschinen ist die Werkzeugspindel eine hochgenaue Maschinenkomponente, deren Funktion entscheidend für die Bearbeitungsgenauigkeit und Bearbeitungsgeschwindigkeit verantwortlich ist, die aber gleichzeitig hohen Belastungen ausgesetzt ist und somit zu den Einheiten einer Werkzeugmaschine zählt, die häufig gewartet, repariert oder ausgetauscht werden müssen.

In der Regel umfasst eine derartige Werkzeugspindel ein Spindelrohr, das in dem Spindelkopf oder Spindelgehäuse gelagert ist, wobei in dem Spindelgehäuse eine längsgestreckte Motorwicklung drehfest verankert ist, deren Rotor drehfest mit dem Spindelrohr verbunden ist, das zu beiden Seiten des Rotors über Spindellager an dem Spindelgehäuse gelagert ist.

Das Spindelrohr enthält ein Spannsystem aus Spannzangen oder Spannklauen, mit denen die Werkzeughalter in die konische Werkzeugaufnahme eingezogen und dort festgehalten werden. Dieses Spannsystem wird über eine sich in der ganzen Länge durch das Spindelrohr erstreckende Zugstange betätigt, die über ein Federpaket in Schließstellung des Spannsystems vorgespannt ist.

Die Zugstange wird betätigt, indem sie an ihrem hinteren Ende in der Regel über eine Betätigungsvorrichtung mit Hydraulik- oder Pneumatikkolben nach vorne gedrückt wird, wodurch das Spannsystem geöffnet wird.

Derartige Spannsysteme sind aus dem Stand der Technik hinreichend bekannt, so dass diesbezüglich auf den veröffentlichten Stand der Technik verwiesen wird.

Die vorliegende Erfindung betrifft Werkzeugmaschine beliebiger Bauart, in deren Werkzeug- oder Hauptspindel über beliebige Spannsysteme Werkzeughalter und Bearbeitungswerkzeuge beliebiger Art eingespannt werden.

Zur Kühlung der Werkzeuge sowie ggf. zum Abspülen der Werkstücke ist die Zugstange längs von einem Kühlmittelkanal durchsetzt, der hinten am Kopf der Zugstange über geeignete Maßnahmen mit Kühlmittel aus einem Kühlmittelreservoir versorgt wird. Auch hier gilt, dass die Erfindung nicht auf eine bestimmte Art der Kühlmittel- oder Schmiermittelversorgung beschränkt ist, es können beliebige Fluide für beliebige Zwecke zugeführt werden.

Die wesentlichen Komponenten einer derartigen Werkzeugspindel sind also als Spindeleinheit anzusehen, die das Spindelrohr, die beiden Spindellager, den elektromotorischen Antrieb, das Spannsystem mit Zugstange sowie Anschlüsse für die hintere Betätigungsvorrichtung, sowie die Kühlmittelversorgung umfassen.

Bei der Reparatur bekannter Werkzeugspindeln muss diese Spindeleinheit demontiert und ausgetauscht werden. Hierfür sind sowohl mechanische und elektrische Arbeiten sowie fluidische Arbeiten durchzuführen. Zum einen muss nämlich die Werkzeugspindel selbst demontiert werden, woraufhin dann der Elektromotor sowie ggf. vorgesehene Messsysteme abgeklemmt werden müssen. Ferner sind Arbeiten erforderlich, die das Kühlschmiermittel für die Werkstückbearbeitung, die Motorkühlung, die Lagerschmierung etc. betreffen.

Um diese Arbeiten durch eine Person durchführen lassen zu können, sind gut ausgebildete Fachleute erforderlich, die zudem weltweit eingesetzt werden müssen.

Trotz des hohen Ausbildungsstandes dieser Fachleute sind gerade bei Servicearbeiten an dieser so genannten Motorspindel Fehler nicht auszuschließen, die sich dann auf die Bearbeitungsgenauigkeit sowie ggf. die Bearbeitungsgeschwindigkeit der mit der entsprechenden Werkzeugspindel ausgerüsteten Werkzeugmaschine auswirken und ggf. zu längeren Stillstandszeiten führen. Unfachmännisches Wechseln reduziert die Lebensdauer.

Um die Servicefreundlichkeit einer derartigen Werkzeugspindel zu verbessern, schlägt die EP 1 958 718 A1 vor, das Spindelgehäuse zweiteilig auszubilden, mit einer hinteren Gehäusehälfte, in der die Betätigung der Spannstange sowie die Übergabe des Kühlschmiermittels erfolgt, sowie einer vorderen Gehäusehälfte, an der über einen Spindelflansch das Spindelrohr mit seinem vorderen Lager angeordnet ist.

Die vordere Gehäusehälfte lässt sich von der hinteren Gehäusehälfte abschrauben, so dass das mit der vorderen Gehäusehälfte verbundene vordere Spindellager zusammen mit Spindelrohr, Rotor, Spannsystem und Zugstange aus dem hinteren Gehäuseteil herausgezogen werden kann. Dabei wird auch die Kühlmittelversorgung automatisch aufgetrennt.

Diese Kühlmittelversorgung umfasst eine Drehdurchführung für die Übergabe des Kühlschmiermittels an die sich mit dem Spindelrohr drehende Zugstange. Diese Drehdurchführung ist in einem Hohlraum in dem für die Betätigung der Zugstange vorgesehenen Kolben angeordnet.

Die Drehdurchführung besteht aus einem axial verschieblichen Übergaberohr, das in dem Hohlraum angeordnet ist und an dessen Stirnseite eine Keramikdichtung vorgesehen ist, die unter pneumatischem Druck und gegen die Kraft einer Rückstellfeder an einer weiteren Keramikdichtung anliegt, die an der Stirnseite der Zugstange vorgesehen ist. Im Betrieb reiben die beiden Keramikdichtungen aufeinander, wobei Maßnahmen zum Auffangen von leckendem Kühlmittel getroffen sind.

Beim Herausnehmen des Spindelrohrs wird die Zugstange mit ihrem oberen, verdünnten Ende aus einer Durchgangsöffnung in dem Kolben herausgezogen.

Um einen Lagerschaden an dem vorderen Spindellager des Spindelrohrs zu beheben, muss also zunächst die vordere Gehäusehälfte von der hinteren Gehäusehälfte gelöst und in der beschriebenen Weise die Spindelteile aus der hinteren Gehäusehälfte herausgezogen werden. Danach muss der Spindelflansch von der vorderen Gehäusehälfte gelöst werden, um die Werkzeugspindel weiter zu demontieren und Zugang zu dem vorderen Spindellager zu bekommen.

Die bekannte Werkzeugspindel ist nicht nur konstruktiv aufwändig aufgebaut, die Servicearbeiten sind ferner aufwändig und mit der Gefahr von Fehlbedienungen verbunden.

Ferner hat sich herausgestellt, dass die bekannte Werkzeugspindel im Langzeitbetrieb nicht zuverlässig genug arbeitet.

Vergleichbare Werkzeugspindeln mit zweiteiligem Spindelgehäuse sind auch in der DE 20 2005 018 002 U1, der EP 1 609 549 A1 sowie der EP 0 920 940 A1 beschrieben.

Vor diesem Hintergrund liegt der vorliegenden Erfindung die Aufgabe zugrunde, eine Werkzeugmaschine der eingangs genannten Art dahingehend weiterzubilden, dass sie bei konstruktiv einfachem Aufbau eine gute Servicefreundlichkeit bietet und betriebssicher arbeitet.

Erfindungsgemäß wird diese Aufgabe bei der eingangs genannten Werkzeugmaschine dadurch gelöst, dass die Werkzeugspindel als austauschbare Spindeleinheit ausgelegt ist, die über einen Spindelflansch austauschbar an dem Spindelgehäuse festgelegt ist, an dessen vorderem Ende ein vorderes Lagergehäuse angeschraubt ist, an dem der Spindelflansch lösbar derart befestigt ist, dass durch Demontage des Spindelflansches von dem vorderen Lagergehäuse die Spindeleinheit aus dem Spindelgehäuse entnehmbar ist.

Auf diese Weise ist es möglich, nach dem Lösen lediglich des Spindelflansches die Spindeleinheit aus dem Spindelgehäuse herauszunehmen. Das Spindelgehäuse ist also nicht zweiteilig aufgebaut, sondern besteht für die Zwecke der Servicemaßnahmen aus einem einzigen Gehäuseteil, aus dem die Spindeleinheit als Ganzes herausgenommen werden kann.

Damit ist es jetzt möglich, lediglich durch Lösen des Spindelflansches die gesamte Spindeleinheit aus dem Spindelgehäuse herauszunehmen, woraufhin dann die Spindeleinheit sofort für Servicemaßnahmen zur Verfügung steht, da beispielsweise die beiden Spindellager ohne weitere Demontage von Gehäuseteilen zugänglich sind.

Der Zeitaufwand für die Demontage der erfindungsgemäßen Spindeleinheit ist deutlich geringer als im Stand der Technik, weil lediglich die den Spindelflansch an dem Spindelgehäuse haltenden Schrauben gelöst werden müssen und keine elektrischen oder fluidtechnischen Arbeiten erforderlich sind.

Auch die erneute Montage der Spindeleinheit ist mit geringem Zeitaufwand und sehr fehlersicher zu bewerkstelligen, denn die Spindeleinheit wird als Ganzes wieder in das Gehäuse eingeschoben und danach lediglich mit dem Spindelflansch im Spindelgehäuse fixiert.

Mit anderen Worten, im Falle eines Schadens an der Werkzeugspindel bringt der zuständige Monteur eine neue Spindeleinheit mit, die er innerhalb kurzer Zeit gegen die defekte Spindeleinheit austauschen kann. Eine weitere Demontage oder gar eine Reparatur vor Ort ist nicht erforderlich, so dass die Werkzeugmaschine nach einem so genannten Crash relativ schnell wieder die Fertigung aufnehmen kann.

Die ausgetauschte Spindeleinheit selbst wird dann anderweitig wieder instandgesetzt.

Ein entscheidender Vorteil bei der neuen Werkzeugspindel ist darin zu sehen, dass die für den Austausch der Spindeleinheit benötigte Zeit relativ gering ist, wobei die auszutauschende Spindeleinheit selbst auf die Komponenten beschränkt ist, die bei einem Spindelcrash zwangsläufig ausgetauscht werden müssen.

Dies bedeutet ferner nicht nur einen Zeit- sondern auch einen Kostenvorteil, denn nur die tatsächlich auszutauschenden Teile sind an der Spindeleinheit vorgesehen und werden mit dieser ausgetauscht.

Die der Erfindung zugrunde liegende Aufgabe wird auf diese Weise vollkommen gelöst.

Zur Vereinfachung der Beschreibung ist im Folgenden mit der Bezeichnung "unten" oder "vorne" der Bereich am vorderen Ende der Werkzeugspindel gemeint, also dort, wo die Werkzeugaufnahme vorgesehen ist. Mit der Bezeichnung "oben" oder "hinten" ist der Bereich am hinteren Ende der Werkzeugspindel gemeint, wo die Übergabevorrichtung für Fluide und die Betätigungsvorrichtung für das Spannsystem in dem Spindelgehäuse angeordnet sind.

In einer Weiterbildung ist es dann bevorzugt, wenn in dem Spindelgehäuse eine Übergabevorrichtung für ein Fluid vorgesehen ist, an der ein um die Drehachse drehbarer Dichtbolzen gelagert ist, der in einen Kühlmittelkanal eingreift, der zentrisch zu der Drehachse in der Spindeleinheit vorgesehen ist, wobei der Dichtbolzen einen Fluidkanal aufweist, der in Fluidverbindung zu dem Kühlmittelkanal steht.

Bei dieser Maßnahme ist von Vorteil, dass zum einen die Übergabe des Fluids, das ein Kühlschmiermittel sein kann, sehr sicher erfolgt, denn der Dichtbolzen kann über einem merklichen Teil seiner gesamten Länge in dem Kühlmittelkanal sitzen, so dass dort eine gute Abdichtung gewährleistet ist, die noch durch Dichtungen unterstützt werden kann.

Die drehbare Lagerung des Dichtbolzens erfolgt dagegen an einem stationären Teil, wo entsprechende Maßnahmen vorgesehen sind, um Leckage zu vermeiden.

Bei der Montage der Spindeleinheit muss daher lediglich der Kühlmittelkanal auf den Dichtbolzen aufgesteckt werden, besondere Dicht- oder Befestigungsmaßnahmen sind nicht erforderlich, die Ausrichtung und Abdichtung erfolgt sozusagen automatisch.

Dies ist insbesondere unter Servicegesichtspunkten von Vorteil, denn das Servicepersonal muss im Inneren des Spindelgehäuses keine weiteren Arbeiten vornehmen, was insbesondere wegen der dazu erforderlichen Demontage auch nicht gewünscht wäre.

Ein wesentlicher Vorteil bei der neuen Übergabevorrichtung ist darin zu sehen, dass keine längsverschieblichen Teile mehr erforderlich sind, wie dies aus der eingangs erwähnten EP 1 958 718 A1 bekannt ist, da die Längsverschieblichkeit von Einheiten zur Übergabe von Fluiden immer Dichtprobleme mit sich bringt.

Ferner ist die Abdichtung in der Übergabevorrichtung gegenüber dem bekannten Stand der Technik deutlich verbessert, weil die Abdichtung nicht durch zwei stirnseitig aufeinanderliegende Rohre mit dazwischen vorgesehenen Dichtungen erfolgt. Nach Erkenntnis der Erfinder der vorliegenden Anmeldung sind diese stirnseitig aufeinanderliegenden Dichtungen nicht hinreichend leckagedicht, zumal sie sich auch noch gegeneinander verdrehen. Die EP 1 958 718 A1 beschäftigt sich folglich auch mit der Frage, wohin das zwischen den aufeinander reibenden Keramikdichtungen ausleckende Fluid abgeführt wird. Ferner ist mit hohem Verschließ zu rechnen.

Diese Probleme werden durch die vorliegende Erfindung auf konstruktiv einfache Weise behoben, so dass die neue Werkzeugmaschine diesbezüglich sehr betriebssicher ist.

In einer Weiterbildung ist es dann bevorzugt, wenn der Dichtbolzen durch formschlüssige Verbindung drehfest in dem Kühlmittelkanal festgelegt ist.

Hier ist von Vorteil, dass zwischen dem Dichtbolzen und dem Kühlmittelkanal kein Schlupf entsteht, was noch einmal die Dichtigkeit der Übergabevorrichtung erhöht.

Ferner ist es bevorzugt, wenn der Fluidkanal den Dichtbolzen in Richtung der Drehachse durchsetzt, wobei vorzugsweise der Kühlmittelkanal in einem hinteren Kopf einer Zugstange eines Spannsystems für die Bearbeitungswerkzeuge angeordnet ist, wobei die Zugstange über eine hinter der Spindeleinheit in dem Spindelgehäuse vorgesehene Betätigungsvorrichtung betätigt wird, die einen mediumsbetätigten Kolben aufweist, der auf die Zugstange einwirkt, wobei der Dichtbolzen vorzugsweise an einer an der Übergabevorrichtung vorgesehenen Drehdurchführung gelagert ist, die in einem Hohlraum des Kolbens angeordnet ist, und dass der Kopf der Zugstange von vorne in den Hohlraum hineinragt und dort mit seiner Stirnseite in einem Abstand zu einer Stirnseite der Drehvorrichtung angeordnet ist.

Hier ist von Vorteil, dass auch Justierarbeiten im Bereich der Übergabevorrichtung nicht erforderlich sind, denn der Kopf der Zugstange und die Drehdurchführung für den Dichtbolzen weisen auch nach montierter Spindeleinheit einen Längsabstand zueinander auf, so dass der Dichtbolzen weder zu weit noch zu kurz in die Kühlmittelbohrung eingeschoben werden kann.

Allgemein ist es bevorzugt, wenn die Spindeleinheit ein Spindelrohr umfasst, in deren vorderer Stirnseite die Werkzeugaufnahme zum Einspannen von Bearbeitungswerkzeugen vorgesehen ist, wenn drehfest auf dem Spindelrohr ein vorderes und eine hinteres Spindellager sowie ein Rotor für den elektrischen Antrieb des Spindelrohres um dessen Drehachse angeordnet sind, wenn in dem Spindelrohr ein Spannsystem zum drehfesten Einspannen der Bearbeitungswerkzeuge angeordnet ist, wenn das Spannsystem eine Zugstange zur Betätigung eines Spannmechanismus umfasst, und wenn in einem hinteren Kopf der Zugstange ein zentrisch zur Drehachse angeordneter Kühlmittelkanal verläuft, der eine nach hinten weisende Öffnung zum Einstecken eines Dichtbolzens zur Einspeisung eines Fluids in den Kühlmittelkanal aufweist, wobei vorzugsweise das vordere Lagergehäuse für das vordere Spindellager vorgesehen ist und in dem Spindelgehäuse ein Gehäuseabschnitt als Lagergehäuse für das hintere Spindellager angeordnet ist, und zwischen dem vorderen und dem hinteren Lagergehäuse dem Rotor zugeordnete Motorwicklungen angeordnet sind.

Diese Maßnahmen sind insbesondere konstruktiv von Vorteil, denn sie ermöglichen zum einen den preiswerten Aufbau der Spindeleinheit und zum anderen einen schnellen und einfachen Austausch der Spindeleinheit.

Vor diesem Hintergrund betrifft die vorliegende Erfindung auch eine austauschbare Spindeleinheit für die neue Werkzeugmaschine, die ein Spindelrohr umfasst, in deren vorderer Stirnseite eine Werkzeugaufnahme zum Einspannen von Bearbeitungswerkzeugen vorgesehen ist, wobei drehfest auf dem Spindelrohr ein vorderes und eine hinteres Spindellager sowie ein Rotor für den elektrischen Antrieb des Spindelrohres um dessen Drehachse angeordnet sind, wobei in dem Spindelrohr ein Spannsystem zum drehfesten Einspannen der Bearbeitungswerkzeuge angeordnet ist, wobei das Spannsystem eine Zugstange zur Betätigung eines Spannmechanismus umfasst, und im hinteren Kopf der Zugstange ein zentrisch zur Drehachse angeordneter Kühlmittelkanal verläuft, der eine nach hinten weisende Öffnung zum Einstecken eines Dichtbolzens zur Einspeisung eines Fluids in den Kühlmittelkanal aufweist.

Solche Spindeleinheiten sind selbständig verkehrsfähige Einheiten, die als Ersatzteile für in Betrieb befindliche Werkzeugmaschinen vorrätig gehalten werden, sei es bei dem Anwender der Werkzeugmaschine oder dem Hersteller, sei es bei einem auf Servicearbeiten und Reparaturen spezialisierten Unternehmen.

Es versteht sich, dass die vorstehend genannten und die nachstehend noch zu erläuternden Merkmale nicht nur in der jeweils angegebenen Kombination, sondern auch in anderen Kombinationenverwendbar sind, wie in den beigefügten Ansprüchen definiert.

Ein Ausführungsbeispiel der Erfindung ist in der Zeichnung dargestellt und wird in der nachfolgenden Beschreibung näher erläutert. Es zeigen:
- Fig. 1: in schematischer Seitenansicht, eine vereinfachte Darstellung einer Werkzeugmaschine, bei der die neue Spindeleinheit eingesetzt wird;
- Fig. 2: in Seitenansicht ein konkretes Ausführungsbeispiel des Spindelkopfes der Werkzeugmaschine aus Fig. 1, in dem die austauschbare Spindeleinheit gelagert ist;
- Fig. 3: eine Darstellung des Spindelkopfes aus Fig. 2 im Längsschnitt, wobei der Spindelflansch abgeschraubt und die austauschbare Spindeleinheit entnommen ist;
- Fig. 4: im Längsschnitt eine schematische Darstellung einer austauschbaren Spindeleinheit, wie sie in den Spindelkopf aus Fig. 3 einsetzbar ist; und
- Fig. 5: im schematischen Längsschnitt und ausschnittsweise einen Spindelkopf mit monierter Spindeleinheit im Bereich der Übergabevorrichtung für Kühlschmiermittel.

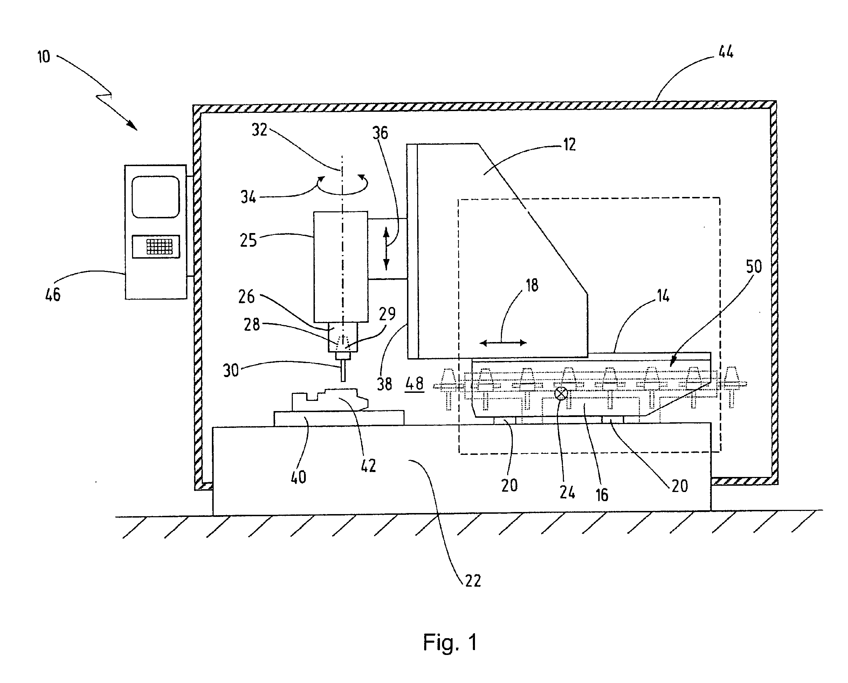

In Fig. 1 ist in einer schematischen und nicht maßstabsgetreuen Seitenansicht eine Werkzeugmaschine dargestellt, die in ihrer Gesamtheit mit der Bezugsziffer 10 bezeichnet ist.

Die Werkzeugmaschine 10 besitzt einen Fahrständer 12, der über eine erste Schlittenführung 14 auf einem Kreuzteil 16 angeordnet ist. Der Fahrständer 12 kann mit Hilfe der ersten Schlittenführung 14 auf dem Kreuzteil 16 in Richtung einer Achse verfahren werden, die üblicherweise als y- Achse bezeichnet wird und hier mit einem Pfeil 18 symbolisch dargestellt ist. Es versteht sich, dass der Fahrständer 12 auf der ersten Schlittenführung 14 motorisch verfahren wird, wobei ein entsprechender Antrieb hier aus Gründen der Übersichtlichkeit nicht dargestellt ist.

Das Kreuzteil 16 ist über eine zweite Schlittenführung 20 auf einem Maschinengestell 22 gelagert. Die zweite Schlittenführung 20 ermöglicht eine Bewegung des Kreuzteils 16 entlang einer zweiten Achse, die hier bei der Bezugsziffer 24 dargestellt ist. Die Bezugsziffer 24 bezeichnet die so genannte X-Achse. Es versteht sich, dass auch die Bewegung des Kreuzteils 16 auf der zweiten Schlittenführung 20 mit Hilfe eines geeigneten Antriebs erfolgt, der hier aus Gründen der Übersichtlichkeit nicht dargestellt ist.

An dem Fahrständer 12 ist ein Spindelkopf 25 mit einer darin drehbar gelagerten Werkzeugspindel 26 vertikal hängend gelagert. Die Werkzeugspindel 26 besitzt an ihrem unteren Ende eine Werkzeugaufnahme 28, in die in bekannter Weise ein Werkzughalter 29 mit einem daran befestigten Bearbeitungswerkzeug 30 eingespannt werden kann. Typischerweise ist der Werkzeughalter standardisiert und vom Steilkegel (SK)- oder Hohlschaftkegel (HSK)-Typ. Die Werkzeugspindel 26 ist dazu ausgebildet, das Bearbeitungswerkzeug 30 um ihre Drehachse 32 zu rotieren, was mit einem Pfeil 34 dargestellt ist. Typischerweise ist die Werkzeugspindel 26 in der Lage, das Bearbeitungswerkzeug 30 mit mehreren tausend Umdrehungen pro Minute zu rotieren, um insbesondere eine Bohr- und Fräsbearbeitung von metallischen Werkstücken zu ermöglichen.

Die Werkzeugspindel 26 kann an dem Fahrständer 12 in Richtung eines Pfeils 36, hier also in vertikaler Richtung, verfahren werden. Dementsprechend ist die Werkzeugspindel 26 über eine dritte Schlittenführung 38 an dem Fahrständer 12 gelagert. Die Bewegung der Werkzeugspindel 26 in Richtung des Pfeils 36 wird üblicherweise als Z-Achse bezeichnet. Typischerweise verlaufen die drei Schlittenführungen 14, 20 und 38 für die drei Bewegungsachsen 18, 24, 36 orthogonal zueinander.

Die Werkzeugmaschine 10 ist also eine Fahrständermaschine mit vertikaler Werkzeugspindel 26 bei der alle drei Bewegungsachsen 18, 24, 36 in dem Bearbeitungswerkzeug 30 realisiert sind.

Mit der Bezugsziffer 40 ist ein auf dem Maschinengestell gelagerter Werkstücktisch bezeichnet, auf dem ein zu bearbeitendes Werkstück 42 aufgespannt ist. Die Bezugsziffer 44 bezeichnet ein Gehäuse, das die bislang beschriebenen Komponenten der Werkzeugmaschine 10 einschließt. Mit der Bezugsziffer 46 ist schließlich eine Steuereinheit bezeichnet, mit deren Hilfe sämtliche Bewegungen der Werkzeugmaschine 10 sowie Hilfsaggregate (Kühlmittelzufuhr, Druckluft sowie das nachfolgend beschriebene Werkzeugmagazin) gesteuert werden.

Auf diese Weise kann das Bearbeitungswerkzeug 30 in einem mit 48 bezeichneten Arbeitstraum verfahren werden, um dort das Werkstück 42 zu bearbeiten.

Während dieser Bearbeitung kommen unterschiedliche Bearbeitungswerkzeuge 30 zum Einsatz, die in einem in Fig. 1 nur sehr schematisch dargestellten Werkzeugmagazin 50 vorrätig gehalten werden.

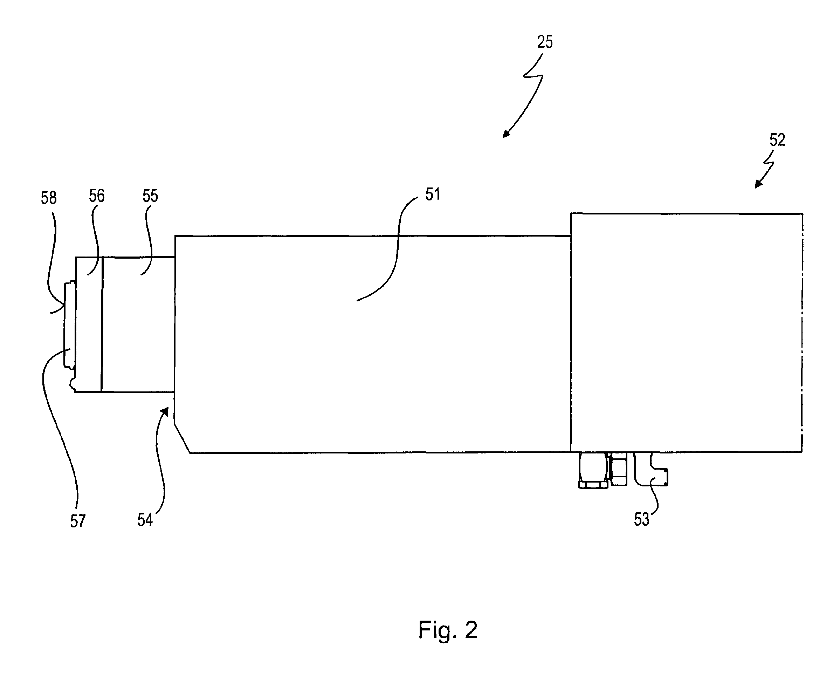

In Fig. 2 ist in Seitenansicht ein konkretes Ausführungsbeispiel des Spindelkopfes 25 der Werkzeugmaschine 10 aus Fig. 1 gezeigt, in dem eine austauschbare Spindeleinheit gelagert ist, wie es nachstehend noch beschrieben wird.

Die Spindelkopf 25 umfasst ein Spindelgehäuse 51, an dessen hinterem Ende 52 Fluideinschlüsse 53 zum Beispiel für die Betätigung eines noch zu beschreibenden Spannsystems angeordnet sind.

An seinem vorderen Ende 54 ist an das Spindelgehäuse 51 ein Lagergehäuse 55 angeschraubt, an das sich nach vorne ein Spindelflansch 56 anschließt, aus dem ein Spindelrohr 57 herausragt, in dessen Stirnseite 58 die Werkzeugaufnahme vorgesehen ist. Der Spindelflansch 56 ist geeignet lösbar an dem Lagergehäuse 55 befestigt.

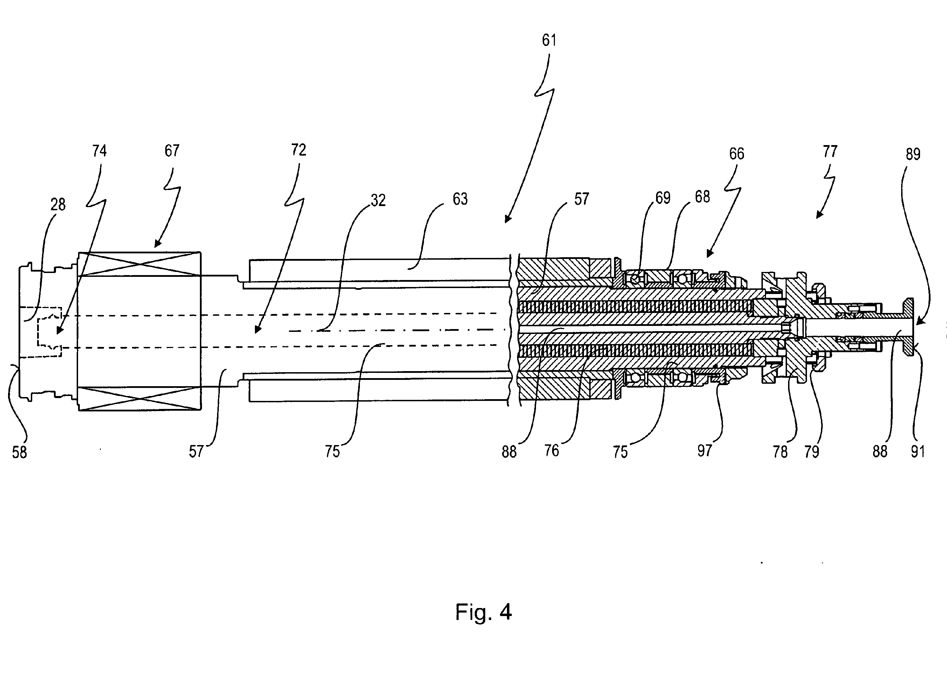

Lediglich durch Demontage des Spindelflansches 56 von dem Lagergehäuse 55 kann eine in Fig. 4 dargestellte, austauschbare Spindeleinheit 61 komplett aus dem Spindelgehäuse 51 entnommen und gegen eine neue Spindeleinheit 61 ausgetauscht werden.

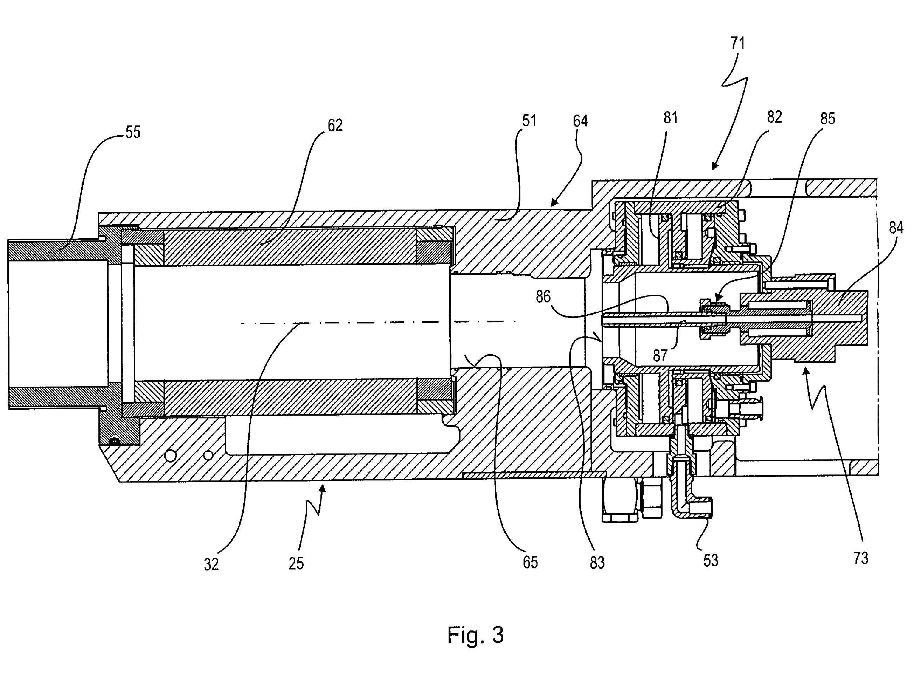

In Fig. 3 ist das Spindelgehäuse 51 mit montiertem Lagergehäuse 55 im schematischen Längsschnitt gezeigt, wobei die Spindeleinheit 61 entnommen wurde; sie ist in Fig. 4 dargestellt.

An das vordere Lagergehäuse 55 schließen sich nach oben Motorwicklungen 62 an, die drehfest in dem Spindelgehäuse 51 angeordnet sind.

Bei montierter Spindeleinheit 61 wirken die Motorwicklungen 62 mit einem in Fig. 4 dargestellten Rotor 63, der auf das Spindelrohr 57 aufgeschrumpft ist, zusammen, um das Spindelrohr 57 mit bis zu mehreren Tausend Umdrehungen je Minute in Rotation zu versetzen.

In Fig. 3 oberhalb (also rechts) der Motorwicklungen 62 ist ein Gehäuseabschnitt 64 als hinteres Lagergehäuse 65 für ein oberes Spindellager 66 ausgebildet, das auf dem Spindelrohr 57 angeordnet ist. Das vordere Lagergehäuse 55 ist für ein vorderes Spindellager 67 vorgesehen, das ebenfalls auf dem Spindelrohr 57 befestigt ist, wie Fig. 3 zeigt. Jedes Spindellager 66, 67 umfasst einen Käfig 68 mit Wälzkörpern 69, die somit unverlierbar an dem Spindelrohr 57 festgelegt sind.

An dieses obere oder hintere Lagergehäuse 65 schließen sich rechts in Fig. 3 eine Betätigungsvorrichtung 71 für ein in der Spindeleinheit 61 vorgesehenes Spannsystem 72 sowie eine Übergabevorrichtung 73 für Kühlschmiermittel an.

Das Spannsystem 72 ist von üblicher Bauart, es umfasst einen Spannmechanismus 74 im Bereich von Werkzeugaufnahme 28 und/oder vorderem Spindellager 67. Dieser Spannmechanismus 74 besteht in der Regel aus Spannzangen oder -klauen, über die ein Kegelschaft oder Hohlkegel eines in die Werkzeugaufnahme 28 eingeführten Werkzeughalters erfasst und eingezogen wird.

Der Spannmechanismus wird über eine Zugstange 75 betätigt, die sich längs durch das Spindelrohr 57 erstreckt und durch ein Tellerfederpaket 76 in ihre Schließstellung vorgespannt wird. Die Zugstange 75 ist an ihrem hinteren Ende mit einem Kopf 77 versehen, auf den eine Ausstoßmutter 78 aufgeschraubt ist, die eine nach oben, also in Fig. 4 nach rechts weisende Schulter 79 aufweist, über die die Betätigungsvorrichtung 71 die Zugstange 75 gegen die Kraft des Tellerfederpaketes in Fig. 4 nach links verschiebt, um einen eingespannten Werkzeughalter zu lösen und auszustoßen.

Die Betätigungsvorrichtung 71 für die Zugstange 75 umfasst einen Doppelkolben 81, der über ein Fluid, das über einen der Fluidanschlüsse 53 zugeführt wird, in seinem Kolbengehäuse 82 in Fig. 3 nach links, also in dem Spindelgehäuse 51 nach vorne bewegt werden kann. Dabei stößt der Doppelkolben 81 mit seiner Stirnseite 83 auf die Schulter 79 der Ausstoßmutter 81 und bewegt so die Zugstange 75 in Löseposition.

Mit dem Kolbengehäuse 82 des Doppelkolbens 81 fest verbunden ist zentrisch zu der Drehachse 32 die Übergabevorrichtung 73 für das Kühlschmiermittel vorgesehen, die einen Übergabeklotz 84 umfasst, an dem eine Drehdurchführung 85 vorgesehen ist, an der ein in Richtung der Drehachse 32 verlaufender und konzentrisch zu dieser angeordneter und um diese drehbarer Dichtbolzen 85 angeordnet ist, der von einem Fluidkanal 87 durchsetzt ist, der in Richtung der Drehachse 32 verläuft.

Zentrisch in dem Kopf 77 der Zugstange 75 ist ein Kühlmittelkanal 88 vorgesehen, der zentrisch zu der Drehachse 32 durch die Zugstange 75 hindurch bis zu der Werkzeugaufnahme 28 verläuft, wo er Kühlschmiermittel an einen eingespannten Werkzeugträger übergibt. Der Kühlmittelkanal 88 mündet in einer Öffnung 89 in einer Stirnseite 91 des Kopfes 77.

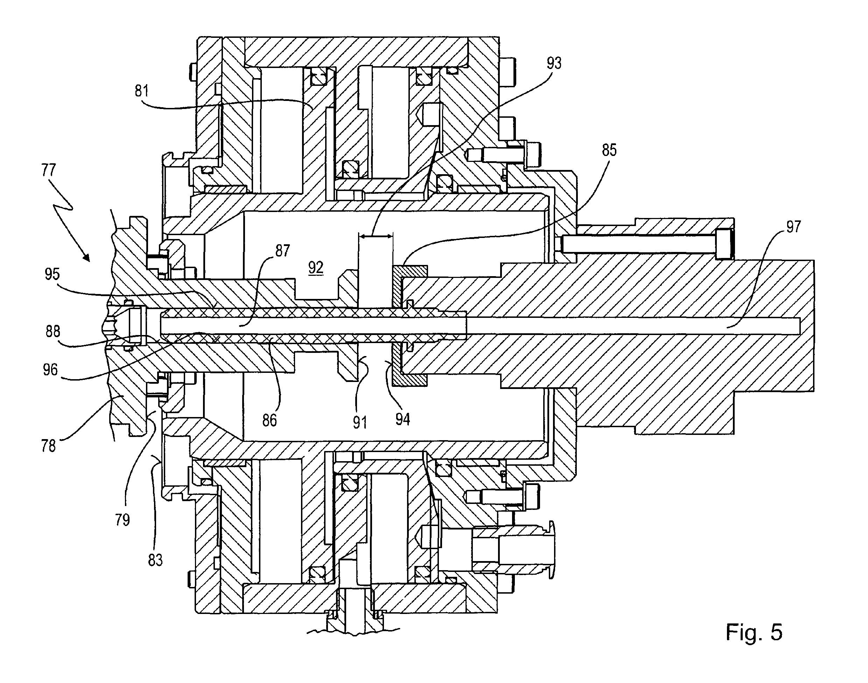

Im montierten Zustand greift der Dichtbolzen 86 in diesen Kühlmittelkanal 88 ein, was in der vergrößerten Darstellung der Fig. 5 gezeigt ist. Auf diese Weise stehen der Fluidkanal 87 und der Kühlmittelkanal 88 in Fluidverbindung, so dass über die Drehdurchführung 85 geliefertes Fluid zu der Werkzeugaufnahme 28 gelangen kann.

In Fig. 5 ist zu erkennen, dass die Drehdurchführung 85 in einem Hohlraum 92 des Doppelkolbens 81 angeordnet ist, in den von vorne, also in Fig. 5 von links, der Kopf 77 der Zugstange 75 hineinragt und dort mit seiner Stirnseite 91 in einem bei 93 gekennzeichneten Abstand zu einer Stirnseite 94 der Drehdurchführung 85 liegt.

Der Dichtbolzen 86 erstreckt sich somit zwar über den größten Teil seiner Länge in dem Kühlmittelkanal 88 und ist dort durch Formschluss drehfest gehalten, er ragt jedoch nicht vollständig in den Kühlmittelkanal 88 hinein, was Justierprobleme vermeidet.

Der Dichtbolzen 86 kann dabei an seinem Außenumfang 95 eine mehreckige Form aufweisen, der der Kühlmittelkanal an seinem Innenumfang 96 entspricht. Außenumfang 95 und Innenumfang 96 bilden so eine formschlüssige Verbindung.

Beim Drehen des Spindelrohres 57 um die Drehachse 32 wird so der Dichtbolzen 86 mit gedreht, was über die drehbare Lagerung an der Drehdurchführung 85 möglich ist, die in bekannter Weise aufgebaut sein kann. Fluid wird dabei über einen Kanal 97 zu der Drehdurchführung geleitet, wo es in den Fluidkanal 87 des sich drehenden Dichtbolzens 86 gelangt, ohne dass die Gefahr von Leckagen besteht.

Die in Fig. 4 dargestellte Spindeleinheit 61 ist als Ganzes austauschbar, sie umfasst als unverlierbare Teile das Spindelrohr 57, auf dem das vordere Spindellager 67 sowie das hintere Spindellager 66 und dazwischen der Rotor 63 von außen drehfest angeordnet sind. Innen in dem Spindelrohr 57 ist unverlierbar das Spannsystem 72 angeordnet, wobei der Kopf 77 der Zugstange 75 mit dem Kühlmittelkanal 88 versehen ist, in den der Dichtbolzen 86 eingreift. Ferner ist an dem Spindelrohr 57 noch ein bei 97 in Fig. 4 angedeuteter Impulsgeber vorgesehen, der mit einem nicht weiter gezeigten Meßsystem in dem Spindelgehäuse 51 zusammenwirkt, um die Drehzahl und/oder umfängliche Position des Spindelrohres 57 zu dem Spindelgehäuse 51 zu erfassen.

Die Spindeleinheit 61 enthält also alle mechanischen, elektrischen und fluidischen Komponenten, die bei einem Austausch entfernt werden müssen. Wegen der gewählten Anordnung sind für die Montage und Demontage der Spindeleinheit 61 jedoch keine elektrischen oder fluidtechnischen Arbeiten erforderlich, das Lösen und erneute Verbinden erfolgt sozusagen automatisch.

Neben dem Lösen oder erneuten Montieren des Spindelflansches 56 ist als weitere "Verbindungsmaßnahme" noch das Abziehen des Kopfes 77 von dem Dichtbolzen 86 bzw. das Aufstecken des Kopfes mit dem Kühlmittelkanal 88 auf den Dichtbolzen 86 erforderlich. Dies erfolgt aber zeitgleich mit dem Herausziehen bzw. Hineinführen der Spindeleinheit 61 in das Spindelgehäuse 51, besondere Justier- oder Verbindungsmaßnahmen sind nicht erforderlich.

Der ringförmige Spindelflansch 56 hält dann die Spindeleinheit 61 in dem Spindelgehäuse 51 dadurch fixiert, dass er mit seiner nach oben, also auf das Spindelgehäuse 51 zu weisenden Ringfläche auf das in dem vorderen Lagergehäuse 55 befindliche, vordere Spindellager 67 drückt und dieses axial fixiert.

## Patentansprüche

1. Werkzeugmaschine zur Bearbeitung von Werkstücken (42) mit Hilfe von Bearbeitungswerkzeugen (30), die in eine Werkzeugaufnahme (28) einspannbar sind, die in einer um ihre Drehachse (32) drehbar in einem Spindelgehäuse (51) gelagerten Werkzeugspindel (26) vorgesehen ist,
**dadurch gekennzeichnet, dass** die Werkzeugspindel (26) als austauschbare Spindeleinheit (61) ausgelegt ist, die über einen Spindelflansch (56) austauschbar an dem Spindelgehäuse (51) festgelegt ist, an dessen vorderem Ende (54) ein vorderes Lagergehäuse (55) angeschraubt ist, an dem der Spindelflansch (56) lösbar derart befestigt ist, dass durch Demontage des Spindelflansches (56) von dem vorderen Lagergehäuse (55) die Spindeleinheit (61) aus dem Spindelgehäuse (51) entnehmbar ist.

2. Werkzeugmaschine nach Anspruch 1, **dadurch gekennzeichnet, dass** in dem Spindelgehäuse (51) eine Übergabevorrichtung (73) für ein Fluid vorgesehen ist, an der ein um die Drehachse (32) drehbarer Dichtbolzen (86) gelagert ist, der in einen Kühlmittelkanal (88) eingreift, der zentrisch zu der Drehachse (32) in der Spindeleinheit (61) vorgesehen ist, wobei der Dichtbolzen (86) einen Fluidkanal (87) aufweist, der in Fluidverbindung zu dem Kühlmittelkanal (88) steht.

3. Werkzeugmaschine nach Anspruch 2, **dadurch gekennzeichnet, dass** der Dichtbolzen (86) durch formschlüssige Verbindung (95, 96) drehfest in dem Kühlmittelkanal (88) festgelegt ist.

4. Werkzeugmaschine nach Anspruch 2 oder 3, **dadurch gekennzeichnet, dass** der Fluidkanal (87) den Dichtbolzen (86) in Richtung der Drehachse (32) durchsetzt.

5. Werkzeugmaschine nach einem der Ansprüche 2 bis 4, **dadurch gekennzeichnet, dass** der Kühlmittelkanal (88) in einem hinteren Kopf (77) einer Zugstange (75) eines Spannsystems (72) für die Bearbeitungswerkzeuge (30) angeordnet ist, wobei die Zugstange (75) über eine hinter der Spindeleinheit (61) in dem Spindelgehäuse (51) vorgesehene Betätigungsvorrichtung (71) betätigt wird, die einen mediumsbetätigten Kolben (81) aufweist, der auf die Zugstange (75) einwirkt.

6. Werkzeugmaschine nach Anspruch 5, **dadurch gekennzeichnet, dass** der Dichtbolzen (86) an einer an der Übergabevorrichtung (73) vorgesehenen Drehdurchführung (85) gelagert ist, die in einem Hohlraum (92) des Kolbens (81) angeordnet ist, und dass der Kopf (77) der Zugstange (75) von vorne in den Hohlraum (92) hineinragt und dort mit seiner Stirnseite (91) in einem Abstand (93) zu einer Stirnseite (94) der Drehvorrichtung (85) angeordnet ist.

7. Werkzeugmaschine nach einem der Ansprüche 1 bis 6, **dadurch gekennzeichnet, dass** die Spindeleinheit (61) ein Spindelrohr (57) umfasst, in deren vorderer Stirnseite (58) die Werkzeugaufnahme (28) zum Einspannen von Bearbeitungswerkzeugen (30) vorgesehen ist, dass drehfest auf dem Spindelrohr (57) ein vorderes (67) und ein hinteres (66) Spindellager sowie ein Rotor (63) für den elektrischen Antrieb des Spindelrohres (57) um dessen Drehachse (32) angeordnet sind, dass in dem Spindelrohr (57) ein Spannsystem (72) zum drehfesten Einspannen der Bearbeitungswerkzeuge (30) angeordnet ist, dass das Spannsystem (72) eine Zugstange (75) zur Betätigung eines Spannmechanismus (74) umfasst, und dass in einem hinteren Kopf (77) der Zugstange (75) ein zentrisch zur Drehachse (32) angeordneter Kühlmittelkanal (88) verläuft, der eine nach hinten weisende Öffnung (89) zum Einstecken eines Dichtbolzens (86) zur Einspeisung eines Fluids in den Kühlmittelkanal (88) aufweist.

8. Werkzeugmaschine nach Anspruch 7, **dadurch gekennzeichnet, dass** das vordere Lagergehäuse (55) für das vordere Spindellager (67) vorgesehen ist und in dem Spindelgehäuse (51) ein Gehäuseabschnitt (64) als Lagergehäuse (65) für das hintere Spindellager (66) angeordnet ist, und dass zwischen dem vorderen und dem hinteren Lagergehäuse (55, 65) dem Rotor (63) zugeordnete Motorwicklungen (62) angeordnet sind.

9. Austauschbare Spindeleinheit für die Werkzeugmaschine (10) nach einem der Ansprüche 1 bis 8, **dadurch gekennzeichnet, dass** sie ein Spindelrohr (57) umfasst, in deren vorderer Stirnseite (58) eine Werkzeugaufnahme (28) zum Einspannen von Bearbeitungswerkzeugen (30) vorgesehen ist, wobei drehfest auf dem Spindelrohr (57) ein vorderes und eine hinteres Spindellager (67, 66) sowie ein Rotor (63) für den elektrischen Antrieb des Spindelrohres (57) um dessen Drehachse (32) angeordnet sind, wobei in dem Spindelrohr (57) ein Spannsystem (72) zum drehfesten Einspannen der Bearbeitungswerkzeuge (30) angeordnet ist, wobei das Spannsystem (72) eine Zugstange (75) zur Betätigung eines Spannmechanismus (74) umfasst, und im hinteren Kopf (77) der Zugstange (75) ein zentrisch zur Drehachse (32) angeordneter Kühlmittelkanal (88) verläuft, der eine nach hinten weisende Öffnung (89) zum Einstecken eines Dichtbolzens (86) zur Einspeisung eines Fluids in den Kühlmittelkanal (88) aufweist.

## Claims

1. Machine tool for machining work pieces (42) by machining tools (30), said machining tools being clampable into a tool receptacle (28) which is provided in a tool spindle (26) that is mounted in a spindle housing (51) so as to be rotatable about its rotational axis (32),
**characterized in that** said tool spindle (26) is arranged as an exchangeable spindle unit (61), said spindle unit being mounted via a spindle flange (56) in replaceable manner at said spindle housing (51), a front bearing housing (55) being screwed to a front end (54) of said spindle housing, said spindle flange (56) being disengageable from said front bearing housing such that by dismantling said spindle flange (56) from said front bearing housing (55) said spindle unit (61) can be withdrawn from said spindle housing (51).

2. The machine tool of claim 1, **characterized in that** in said spindle housing (51) a delivering unit (73) for a fluid is provided, a sealing bolt (86) rotatable about said rotational axis (32) being supported at said delivering unit, said sealing bolt engaging into a coolant channel (88) provided centrically to said rotational axis (32) in said spindle unit (61), whereby said sealing bolt (86) comprises a fluid channel (87) in fluid communication with said coolant channel (88).

3. The machine tool of claim 2, **characterized in that** said sealing bolt (86) is arranged in said coolant channel (88) by positive connection (95, 96) so as to be not rotatable.

4. The machine tool of claim 2 or 3, **characterized in that** said fluid channel (87) runs through said sealing bolt (86) in the direction of said rotational axis (32).

5. The machine tool of anyone of claims 2 - 4, **characterized in that** said coolant channel (88) is arranged in a rear head (77) of a drawbar (75) of a clamping system (72) for said machining tools (30), whereby said drawbar (75) is actuated via an actuating unit (71) provided behind said spindle unit (61) in said spindle housing (51), said actuating unit comprising a medium-actuated piston (81) acting on said drawbar (75).

6. The machine tool of claim 5, **characterized in that** said sealing bolt (86) is supported at a rotary joint (85) provided at said delivery unit (73), said rotary joint being arranged in a hollow space (92) of said piston (81), and that said head (77) of said drawbar (75) extends from the front into said hollow space (92) where it is arranged with its front face (91) at a distance (93) to a front face (94) of said rotary joint (85).

7. The machine tool of anyone of claims 1 - 6, **characterized in that** said spindle unit (61) comprises a spindle tube (57) having provided in its front face (58) said tool receptacle (28) for clamping machining tools (30), and **in that** at said spindle tube (57) a front (67) and a rear (66) spindle bearing as well as a rotor (63) for an electrical drive of said spindle tube (57) about its rotational axis (32) are arranged against rotation, and that in said spindle tube (57) a clamping system (72) for clamping said machining tools (30) against rotation is arranged, and that said clamping system (72) comprises a drawbar (75) for actuation of a clamping mechanism (74), and **in that** in a rear head (77) of said drawbar (75) a coolant channel (88) is running centrically with said rotational axis (32), whereby said coolant channel comprises an opening (89) pointing rearwards for inserting a sealing bolt (86) for feeding a fluid into said coolant channel (88).

8. The machining tool of claim 7, **characterized in that** said front bearing housing (55) is provided for said front spindle bearing (67), and **in that** in said spindle housing (51) a housing part (64) is arranged as bearing housing (65) for said rear spindle bearing (66), and that between said front and rear bearing housing (55, 65) motor windings (62) assigned to said rotor (63) are arranged.

9. Replaceable spindle unit for a machine tool (10) according to anyone of claims 1 - 8, **characterized in that** it comprises a spindle tube (57) having in its front face (58) provided a tool receptacle (28) for clamping machining tools (30), whereby a front and a rear spindle bearing (67, 66) as well as a rotor (63) for an electrical drive of said spindle tube (57) about the rotational axis (32) of said spindle tube are arranged against rotation at said spindle tube (57), whereby in said spindle tube (57) a clamping system (72) for clamping said machining tools (30) against rotation is provided, whereby said clamping system (72) comprises a drawbar (75) for actuating a clamping mechanism (74), and whereby in a rear head (77) of said drawbar (75) a cooling channel (88) runs centrically to said rotational axis (32), said cooling channel having a rearward pointing opening (89) for inserting a sealing bolt (86) for feeding a fluid into said coolant channel (88).

## Revendications

1. Machine-outil pour l'usinage de pièces (42) à l'aide d'outils d'usinage (30) qui peuvent être serrés dans un logement d'outil (28) prévu dans une broche d'outil (26) logée de manière à pouvoir tourner autour de son axe de rotation (32) dans un boîtier de broche (51),
**caractérisée en ce que** la broche d'outil (26) est conçue comme une unité de broche interchangeable (61) qui est fixée de manière interchangeable par une bride de broche (56) sur le boîtier de broche (51), sur l'extrémité avant duquel (54) un boîtier d'appui avant (55) est vissé, sur lequel la bride de broche (56) est fixée de manière détachable de sorte que l'unité de broche (61) puisse être retirée du boîtier de broche (51) en démontant la bride de broche (56) du boîtier d'appui (55) avant.

2. Machine-outil selon la revendication 1, **caractérisée en ce que** le boîtier de broche (51) prévoit un dispositif de remise (73) pour un fluide, sur lequel un boulon étanche (86) pouvant tourner autour de l'axe de rotation (32) est logé, lequel s'engage dans un canal d'agent de refroidissement (88) prévu de manière centrale par rapport à l'axe de rotation (32) dans l'unité de broche (61), le boulon étanche (86) présentant un canal fluidique (87) en liaison fluidique avec le canal d'agent de refroidissement (88).

3. Machine-outil selon la revendication 2, **caractérisée en ce que** le boulon étanche (86) est fixé sans pouvoir tourner par une liaison à complémentarité de formes (95, 96) dans le canal d'agent de refroidissement (88).

4. Machine-outil selon la revendication 2 ou 3, **caractérisée en ce que** le canal fluidique (87) traverse le boulon étanche (86) en direction de l'axe de rotation (32).

5. Machine-outil selon l'une quelconque des revendications 2 à 4, **caractérisée en ce que** le canal d'agent de refroidissement (88) est disposé dans une tête arrière (77) d'une tige de traction (75) d'un système de serrage (72) pour les outils d'usinage (30), la tige de traction (75) étant actionnée par un dispositif d'actionnement (71) prévu derrière l'unité de broche (61) dans le boîtier de broche (51), lequel dispositif d'actionnement (71) présente un piston (81) actionné par fluide qui agit sur la tige de traction (75).

6. Machine-outil selon la revendication 5, **caractérisée en ce que** le boulon étanche (86) est logé sur un passage rotatif (85) prévu sur le dispositif de remise (73), qui est disposé dans un espace creux (92) du piston (81) et **en ce que** la tête (77) de la tige de traction (75) pénètre vers l'avant dans l'espace creux (92) et y est disposée avec son côté frontal (91) à distance (93) d'un côté frontal (94) du dispositif rotatif (85).

7. Machine-outil selon l'une quelconque des revendications 1 à 6, **caractérisée en ce que** l'unité de broche (61) comporte un tube de broche (57), dans le côté avant duquel (58) le logement d'outil (28) est prévu pour le serrage des outils d'usinage (30), **en ce qu'**un appui de broche avant (67) et un appui de broche arrière (66) ainsi qu'un rotor (63) pour l'entraînement électrique du tube de broche (57) autour de son axe de rotation (32) sont disposés sans pouvoir tourner sur le tube de broche (57), **en ce que** dans le tube de broche (57), un système de serrage (72) est disposé pour le serrage sans pouvoir tourner des outils d'usinage (30), **en ce que** le système de serrage (72) comporte une tige de traction (75) pour l'actionnement d'un mécanisme de serrage (74) et **en ce qu'**un canal d'agent de refroidissement (88) disposé de manière centrale par rapport à l'axe de rotation (32) s'étend dans une tête arrière (77) de la tige de traction (75), lequel canal présente une ouverture (89) dirigée vers l'arrière destinée à l'insertion d'un boulon étanche (86) pour l'alimentation d'un fluide dans le canal d'agent de refroidissement (88).

8. Machine-outil selon la revendication 7, **caractérisée en ce que** le boîtier d'appui avant (55) pour l'appui de broche avant (67) est prévu et une section de boîtier (64) est disposée dans le boîtier de broche (51) pour servir de boîtier d'appui (65) en vue de l'appui de broche arrière (66), et **en ce que** des enroulements du moteur (62) associés au rotor (63) sont disposés entre les boîtiers d'appui (55, 65) avant et arrière.

9. Unité de broche interchangeable pour la machine-outil (10) selon l'une quelconque des revendications 1 à 8, **caractérisée en ce qu'**elle comporte un tube de broche (57), dans le côté avant duquel (58) un logement d'outil (28) est prévu pour le serrage d'outils d'usinage (30), un appui de broche avant et un appui de broche arrière (67, 66) ainsi qu'un rotor (63) pour l'entraînement électrique du tube de broche (57) autour de son axe de rotation (32) étant disposés sans pouvoir tourner sur le tube de broche (57), un système de serrage (72) étant disposé dans le tube de broche (57) pour le serrage sans pouvoir tourner des outils d'usinage (30), le système de serrage (72) comportant une tige de traction (75) pour l'actionnement d'un mécanisme de serrage (74), et un canal d'agent de refroidissement (88) disposé de manière centrale par rapport à l'axe de rotation (32) s'étendant dans la tête arrière (77) de la tige de traction (75), lequel canal présente une ouverture (89) tournée vers l'arrière destinée à l'insertion d'un boulon étanche (86) pour l'alimentation d'un fluide dans le canal d'agent de refroidissement (88).
